# EUROPEAN PATENT SPECIFICATION

(11) **EP 4 258 013 B1**
(45) Date of publication and mention of the grant of the patent: **31.01.2024**
(21) Application number: 22166671.2
(22) Date of filing: 05.04.2022
(51) Int. Cl.: G01S 7/481, G01S 17/48

(54) **AN OPTICAL SENSOR FOR THE DETECTION OF OBJECTS**
OPTISCHER SENSOR ZUR ERKENNUNG VON OBJEKTEN
CAPTEUR OPTIQUE POUR LA DÉTECTION D'OBJETS

(43) Date of publication of application: 11.10.2023
(73) Proprietor: SICK AG, 79183 Waldkirch (DE)
(72) Inventor: LIM, Sook Choo, 730672 Singapore (SG); KRIENER, Eva-Maria, 79117 Freiburg (DE); BAI, Jiang Feng, 751588 Singapore (SG)
(74) Representative: Manitz Finsterwald Patent- und Rechtsanwaltspartnerschaft mbB

(56) References cited:
- EP-A1- 3 805 790
- EP-B1- 3 546 984
- US-A1- 2022 084 240
- US-B2- 6 937 348

## Description

The invention relates to an optical sensor for the detection of objects in a monitored zone in accordance with the principle of triangulation, the optical sensor comprising a light transmitter for transmitting transmitted light into the monitored zone, wherein the light transmitter comprises at least two light sources laterally spaced from each other, and a transmission optics; a light receiver that has a plurality of reception elements for receiving transmitted light from the monitored zone that is remitted by an object to be detected; and a reception optics arranged upstream of a light receiver for generating a light spot on the light receiver from the remitted light, wherein the light transmitter, the light receiver and the reception optics are arranged with respect to one another such that the position of the light spot on the light receiver in a direction of triangulation results in dependence on a distance of a location in the monitored zone wherefrom the transmitted light is remitted, and wherein the transmission optics is configured to form the light emitted by the at least two light sources to form a transmitted light bundle of rays.

It is known to determine the presence and/or distance of objects in a monitored zone using an optical sensor that works in accordance with the triangulation principle. Such a triangulation optical sensor comprises a light source, for example a light emitting diode or a laser, and a transmission optics to transmit a transmitted light beam into a monitored zone to an object to be detected that may be present there. The transmitted light can be remitted by such an object, i.e., can be diffusely or reflectively reflected and can be detected by a light receiver that forms a reception unit together with the reception optics. The light receiver in known solutions comprises at least one array of photosensitive reception elements.

The position of a light spot generated by the remitted light on the light receiver in the so-called triangulation direction changes in dependence on the distance between the triangulation optical sensor (also called triangulation light sensor) and a location or spot in the monitored zone wherefrom the transmitted light is remitted. This location or spot of remission can be located on a surface of an object being present in the monitored zone or another surface within the monitored zone, e.g., the surface of a conveyor transporting objects to be detected by the optical sensor. There is a clear geometrical relationship between the point of incidence on the light receiver and the distance of the spot of remission. A distance between the object and the optical sensor can thus be determined by evaluating the light distribution on the light receiver. In order to in particular achieve a high accuracy in the distance determination, such a light receiver has to have a plurality of photosensitive reception elements that are arranged next to one another in the triangulation direction.

It can furthermore be determined with a corresponding evaluation of the light distribution on the light receiver whether an object is located inside or outside a sensing region, i.e., whether the distance of the object is inside or outside a predefined limit also called a sensing distance.

In triangulation optical sensors having background suppression, the light receiver comprises at least two reception elements, wherein a so-called near element is arranged such that it is impacted by a light beam when it is remitted from an object that is located within a near zone in front of the triangulation optical sensor and wherein a so-called far element is arranged such that it is impacted by a light beam that is reflected by an object that is located in a far zone in front of the triangulation optical sensor. The far zone is here by definition further remote from the triangulation optical sensor than the near zone. The difference between the photodiode currents of the reception elements of these two zones can be used for the signal evaluation.

To be able to reliably detect objects that are located on a conveying path, for example on a conveying belt, a sensing distance or distance threshold value is defined, wherein the objects to be detected are associated with the near zone in dependence on their height, i.e., on the distance of an object surface detected by the transmitted light from the conveying path, whereas the conveying path itself is associated with the far zone. The area of the conveying path defines is also called the background.

The sensing distance or the distance threshold value thus determines the switching point of the triangulation optical sensor that decides whether or not an object detection signal is generated.

For typical applications of triangulation optical sensors usually light transmitters comprising a single light source are used. However, for certain applications it may be desirable to use light transmitters comprising two or more light sources preferably having different optical characteristics. An example for a differing characteristic is the wavelength of the light being emitted from a particular light source.

Optical sensors comprising two or more light sources which emit light at different wavelengths are disclosed in EP 2 278 361 B1, DE 20 2015 101 912 U1 and EP 1 050 843 A2.

For technical reasons the two or more light sources have to be arranged laterally spaced from each other, i.e., the light sources are spaced in a transverse direction with regard to the main propagation direction of the emitted light. Conventional transmission optics form the light emitted by the light sources in a way that it leaves the transmission optics as a convergent light bundle of rays having a focal point which is typically located within a predefined working distance of the optical sensor, i.e., the focal point is located between the optical sensor and a maximum distance limiting the monitored zone. Behind the focal point the bundle of rays propagates as a divergent bundle of rays having a certain divergence angle which depends on the optical design of the transmission optics.

As a consequence, the diameter of a remitted light bundle at the entrance aperture of the reception optics depends on the distance of the remitting object. Usually, the size of the entrance aperture of the reception optics and the divergence angle are chosen such that substantially the entire cross section of the remitted light bundle can pass the entrance aperture as long as the detected object is within a predefined maximum working distance.

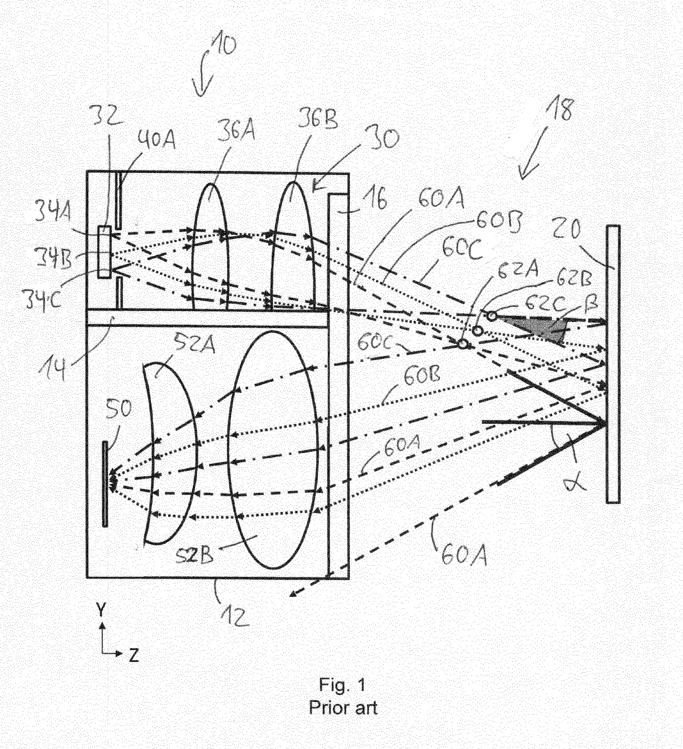

Fig. 1 shows an optical sensor 10 according to the prior art comprising a light transmitter 30 having three light sources 34A to 34C laterally spaced from each other in the triangulation direction which is indicated in Fig. 1 as Y direction. The three light sources 34A to 34C may be configured as an RGB LED having three light emitting zones which define the different light sources 34A to 34C. The zone or light source 34A located in Fig. 1 in a top position may emit red light 60A, the light source 34B located in the center may emit green light 60B, and the light source 34C located in a bottom position may emit blue light 60C. Each light source 34A to 34C emits a partial transmitted light bundle of rays 60A to 60C which are formed by a transmission optics having two lenses 36A, 36B. Each partial light bundle has a particular focal point 62A to 62C. In Fig. 1 the respective edge rays of the light bundles 60A to 60C are schematically shown. The divergence angle β is indicated for the blue light bundle 60C.

The three light bundles may be remitted by a detected object 20 back into the direction of the optical sensor 10 and focused on a light receiver 50 by a reception optics comprising to lenses 52A, 52B. In the geometry shown in Fig. 1, only the green light bundle 60B and the blue light bundle 60C are entirely received by the reception optics. However, only an upper part of the red light bundle 60A passes the entrance aperture of the reception optics whereas the other part misses the entrance aperture.

As a consequence, the amount of light which can be detected by the light receiver 50 deteriorates for the red light bundle 60A, but not for the green light bundle 60B and the blue light bundle 60C. For the arrangement represented in Fig. 1, the amount of red light 60A received by the light receiver 50 decreases with an increasing distance between the optical sensor 10 and the remitting object 20.

For a significantly shorter working distance as shown in Fig. 1, only the red light bundle 60A and the green light bundle 60B would entirely be received by the reception optics whereas only a part of the blue light bundle 60C would passes the entrance aperture of the reception optics and the other part would miss the entrance aperture.

This reduces the sensitivity of the optical sensor 10 for a particular wavelength depending on the working distance and makes it impossible to quantitatively analyze the electrical signals generated by the light receiver 50.

EP 3 546 984 B1 relates to a system for projecting a linear beam of light on a distant object so as to form a line of illumination on the distant object. Images of the projected beam lines are recorded by a camera which is spaced apart from the projector.

EP 3 805 790 A1 discloses an optoelectronic sensor and a method for the detection of objects in a monitored zone. A transmission optics and/or a reception optics of the sensor comprise a second optical system for the correction of aberrations.

US 6,937,348 B2 relates to a system for generating a three-dimensional image of an object or scene. A repeating pattern of light which varies spatially in intensity is produced in different light colours.

US 2022/0084240 A1 discloses an optical apparatus for a contactless object shape measurement. The surface of an object is illuminated by rays having different wavelengths and being emitted along different ray paths.

It is an object of the present invention to provide an optical sensor avoiding or at least minimizing the aforementioned disadvantages.

The object is satisfied by an optical sensor having the features of claim 1. The invention provides an optical sensor for the detection of objects in a monitored zone in accordance with the principle of triangulation. The optical sensor comprises a light transmitter for transmitting transmitted light into the monitored zone, wherein the light transmitter comprises at least two light sources laterally spaced from each other, and a transmission optics; a light receiver that has a plurality of reception elements for receiving transmitted light from the monitored zone that is remitted by an object to be detected; and a reception optics arranged upstream of the light receiver for generating a light spot on the light receiver from the remitted light, wherein the light transmitter, the light receiver and the reception optics are arranged with respect to one another such that the position of the light spot on the light receiver in a direction of triangulation results in dependence on a distance of a location in the monitored zone wherefrom the transmitted light is remitted, and wherein the transmission optics is configured to form the light emitted by the at least two light sources to form a transmitted light bundle of rays, wherein the light bundle has a first focal point for rays propagating within a first plane and a second focal point for rays propagating within a second plane which is perpendicular to the first plane, wherein the distance of the first focal point from the transmission optics is shorter than the distance of the second focal point from the transmission optics.

For a better understanding, the direction of triangulation may be defined as Y direction whereas the main direction of light propagation of the transmitted light basically extends - disregarding an inclination angle which is predetermined by the triangulation geometry - in the Z direction being vertical to the Y direction. The third direction which is vertical to the Y direction and to the Z direction can be named as X direction. With this convention the first plane will basically extend in or parallel to the X-Z plane and the second plane will basically extend in or parallel to the Y-Z plane.

A plane extending in or parallel to the X-Y plane may be also named as basic plane. Thus, the laterally spaced light sources are spaced in a transverse direction with regard to the main propagation direction of the light, i.e., within the basic plane or X-Y plane. Nevertheless, the light sources may also comprise a displacement in the Z direction.

The transmitted light bundle as formed by the transmission optics has a smaller divergence angle in the second plane or in the Y-Z plane compared to the divergence angle of a light bundle transmitted by a comparable optical sensor according to the prior art as shown in Fig. 1. As a result, the diameter of the light bundle within the triangulation direction or Y direction transmitted by the optical sensor according to the invention is generally smaller than the diameter of a light bundle transmitted by the optical sensor of Fig. 1, at least for larger working distances.

The plurality of reception elements may be formed as an array of reception elements which at least extends in the triangulation direction. The reception elements may generate electrical signals by converting received light into an electrical charge, electrical voltage or an electrical current. The optical sensor may comprise an evaluation unit that is configured for receiving electrical signals from the light receiver and for generating an object detection signal from the received signals.

The evaluation unit may further be configured for controlling, in particular for activating and deactivating, the at least two light sources independent from each other.

The optical sensor may be designed, e.g., as a distance measuring optical sensor which measures the distance of a detected object or as an optical sensor with background suppression which basically detects only objects being within a defined distance or a defined distance range relative to the optical sensor.

In accordance with the invention, the transmission optics comprises an astigmatic lens arrangement having a first focal length for rays propagating in the first plane and a second focal length for rays propagating in the second plane, wherein the first focal length is smaller than the second focal length. The planes mentioned are, e.g., a meridional plane and a sagittal plane of the astigmatic lens arrangement. Preferably, the refractive power for rays propagating in the first plane and for rays propagating in the second plane is positive. In other words, both refractive powers are positive but differ in their absolute values.

In accordance with the invention, the astigmatic lens arrangement comprises one astigmatic lens having a first surface facing to the light source being convex within the first plane and concave within the second plane and a second surface facing to the monitored zone being convex. Such kind of astigmatic lens can also be named as biconical lens. It is able to generate an elongated shape of a light spot on a detected object or the light receiver. Preferably, the astigmatic lens arrangement is constituted by the one astigmatic lens, i.e., the astigmatic lens arrangement exclusively comprises the one astigmatic lens.

In accordance with an embodiment not claimed, the astigmatic lens arrangement comprises a collecting lens with positive refractive power, preferably a bi- convex lens, and an astigmatic lens with negative refractive power within the second plane and neutral refractive power within the first plane, the astigmatic lens preferably having a first surface facing to the at least two light sources and a second surface facing to the monitored zone, wherein both surfaces are concave within the second plane and planar within the first plane, wherein preferably the collecting lens is arranged behind the astigmatic lens in the propagation direction of the transmitted light. The concave curvature radii of the surfaces of the astigmatic lens within the second plane are preferably identical for the first and the second surface. Compared to the single-lens design of the aforementioned astigmatic lens arrangement this two-lens design provides an astigmatic lens arrangement having further advantages. Beside the possibility for an improved compensation of lens aberrations, it can support a tilting of the propagation direction of the transmitted light with respect to the basic plane in order to establish an inclination angle between the main propagation direction and the Z direction. This will be explained in more detail later on.

In accordance with a preferred embodiment, the distance of the second focal point from the transmission optics is infinite. This results in the light bundle of rays being at least substantially parallel within the second plane or Y-Z plane.

In accordance with another preferred embodiment, the transmission optics further comprises a collimator lens being positioned between the light sources and the astigmatic lens arrangement. The transmission optics may further comprise at least one aperture, in particular a field aperture being positioned between the collimator lens and the astigmatic lens or between the collecting lens and the astigmatic lens. The field aperture facilitates forming a light bundle with well-defined boundaries.

In accordance with another preferred embodiment the transmission optics further comprises an annular conical reflector positioned between the light sources and the collimator lens and configured for collimating light emitted from the light sources into the direction of the collimator lens. This conical reflector increases the luminance of the transmitted light as it also collects beams that are emitted from the light sources within a high angle of radiation. The annular conical reflector may have a first opening with a small diameter and a second opening with a large diameter, wherein the opening with the small diameter points towards the light sources.

In accordance with another preferred embodiment the transmission optics comprises a plurality of lenses, wherein at least a part of the lenses is configured as Fresnel lenses. The use of Fresnel lenses allows to arrange the components of the optical sensor in a more compact way and thus to reduce the size of a housing of the optical sensor since the necessary thickness of the required lenses can be significantly reduced.

In accordance with another preferred embodiment the light bundle propagates along a main propagation axis which is inclined with respect to a basic plane which is defined at least by the light sources. In other words, the main propagation axis of the light bundle is not parallel but inclined with respect to the Z direction. The main propagation axis of the light bundle can be regarded as a symmetry axis of the light bundle. With the light receiver being positioned within the basic plane or at least near to the basic plane, the light sources, a location of incidence of the transmitted light on the object and the light receiver each define a vertex of a triangle, with a first edge defined by the main propagation axis and a second edge extending in the basic plane between the light sources and the light receiver, wherein the second side is parallel to the triangulation direction and wherein the angle enclosed by the first and the second edge and defining the degree of inclination is smaller than 90°. The third edge of the triangle thus is defined by a line between the point of incidence on the object and the light receiver.

In accordance with another preferred embodiment the transmission optics comprises a plurality of lenses each of them having a respective optical axis and a respective central point located on the optical axis, wherein the lenses are laterally shifted so that the respective central points of the lenses are located on the main propagation axis and the respective optical axis of the lenses are oriented in a direction perpendicular to the basic plane. It is not necessary to mount the lenses in a tilted manner with respect to the basic plane. Instead, the main planes of the respective lenses extend parallel to the basic plane. The central point of a lens can be defined as an optical center of symmetry or with regard to the vertices of the lens surfaces. The central point does not necessarily have to define a mechanical center of symmetry since the lenses may be cut off asymmetrically in a border area.

In accordance with another preferred embodiment, the wavelength of the light emitted from a respective light source differs from the wavelength emitted from each other light source. Preferably, the light transmitter comprises a RGB LED having three light emitting zones constituting three respective light sources. The respective light emitting zones emit red, green and blue light. Alternatively, the wavelength of the light emitted from the light source may also be selected from a non-visible wavelength range, e.g., it can be selected from the ultraviolet or the infrared wavelength range. Additionally or alternatively, the at least two light sources may differ from each other with regard to another optical characteristics, which may comprise, e.g., a polarization direction or a modulation of the light emitted from a respective light source.

In accordance with another preferred embodiment, the light sources are arranged so that they are laterally spaced from each other, preferably exclusively in the direction of triangulation. As a result, the light spot generated on the object and on the light receiver has an elongated shape with a main direction of extension extending in the direction of triangulation.

Further, preferred embodiments of the invention result from the dependent claims, from the description and from the drawings.

The invention will be described in the following with reference to embodiments and to the enclosed drawings. In this respect, the Figures are to be understood schematically and not to scale. There are shown:
- Fig. 1: a schematic sideview of an optical sensor in accordance with the prior art;
- Fig. 2: a schematic sideview of an optical sensor in accordance with a first embodiment;
- Fig. 3: a schematic top view of the optical sensor of Fig. 2;
- Fig. 4: a schematic representation of a light spot generated on an object by an optical sensor in accordance with the invention;
- Fig. 5: a schematic sideview of an optical sensor in accordance with a second embodiment not forming part of the claimed invention;
- Fig. 6: a top view of the optical sensor of Fig. 5;
- Fig. 7: a schematic sideview of an optical sensor according to a third embodiment; and
- Fig. 8: a schematic sideview of an optical sensor in accordance with a fourth embodiment.

In the following, the same reference numerals are used for identic or similar components of the various embodiments.

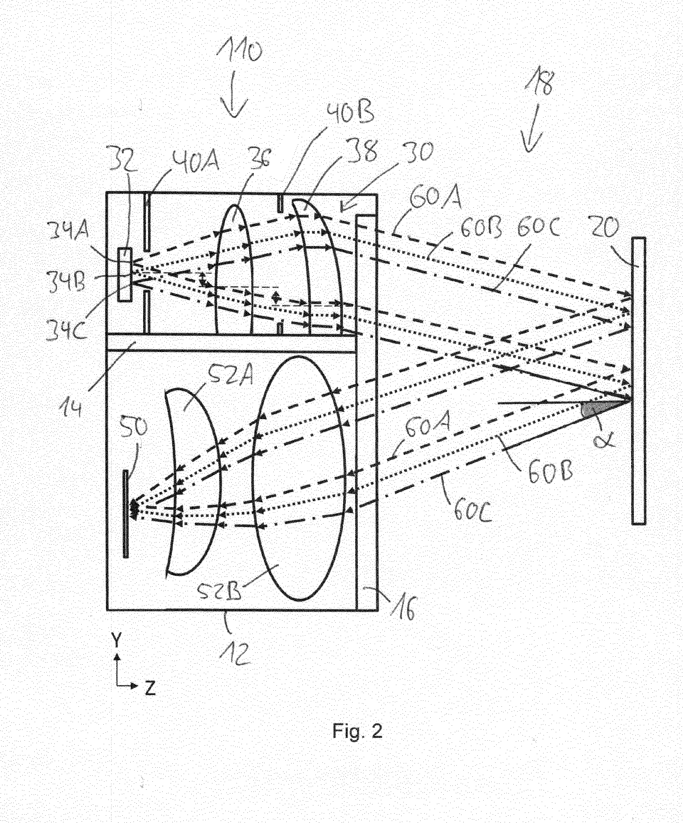

Fig. 2 shows a first embodiment of an optical sensor 110 which is designed according to the triangulation principle. The optical sensor 110 comprises a light transmitter 30 for transmitting transmitted light into a monitored zone 18. The light transmitter 30 comprises an LED 32 having three light sources 34A to 34C which are laterally spaced from each other in the Y direction which corresponds with the triangulation direction of the optical sensor 110.

In all embodiments described herein the light sources 34A to 34C can be formed as respective LED chips having a light emitting zone which are arranged laterally spaced in the Y direction on a common substrate. The LED chip or light source 34A may for example emit red light indicated by dashed lines 60A, the light source 34B may for example emit green light indicated by dotted lines 60B, and the light source 34C may for example emit blue light indicated by dash-dotted lines 60C. For example, the lateral dimensions of the three light sources 34A to 34C or light emitting zones can be in the order of 0,3 mm x 0,3 mm. The light sources 34A to 34C respective the light emitting zones can be spaced in the order of 0,4 mm from each other, measured from center to center.

The light transmitter 30 further comprises a transmission optics having two lenses 36, 38 which are described hereinafter. The transmission optics may further comprise one or more apertures. In the embodiment of Fig. 2 a first aperture 40A is arranged between the LED 32 and the lens 36 and a second aperture 40B between the lens 36 and the lens 38. The second aperture 40B works as a field aperture.

The transmitted light passes through the monitored zone 18 and may hit a target or object 20 being present within the monitored zone 18. The transmitted light can be remitted back to the optical sensor 110 under a reflection angle α.

The remitted light can be received by a reception optics which comprises a first reception lens 52A formed as a meniscus lens and a second reception lens 52B formed as a bi-convex lens. The reception optics focuses the remitted light into a light spot which is detected by a light receiver 50 which can comprise an array of photosensitive reception elements being arranged in the triangulation direction. The photosensitive reception elements of the light receiver 50 transform optical signals into electrical signals which can be received by an evaluation unit (not shown) connected to the light receiver 50.

The light transmitter 30 on the one hand and the light receiver 50 and the reception optics with the reception lenses 52A, 52B on the other hand are arranged in a respective compartment of a common housing 12 wherein the compartments are separated from each other by a light-proof separator wall 14. The LED 32 and the light receiver 50 are arranged within a (virtual) basic plane which extends in the X direction (perpendicular to the figure plane) and the Y direction. The housing 12 can comprise a common front window 16 covering both compartments and being transparent at least for the light wavelength emitted by the light sources 34A to 34C.

Exemplary dimensions of the housing 12 are 12 mm in the X direction, 31.5 mm in the Y direction and 21 mm in the Z direction. An exemplary effective first focal length for light transmitter 30 is 9.3 mm. An exemplary sensing range in the monitored zone is between 9.5 mm and 15.5 mm. The wavelength for the red light source 34A can be 629 nm, for the green light source 34B 528 nm and for the blue light source 34C 468 nm. The lenses of all embodiments can preferably be made of polycarbonate with a refractive index of around 1.5855.

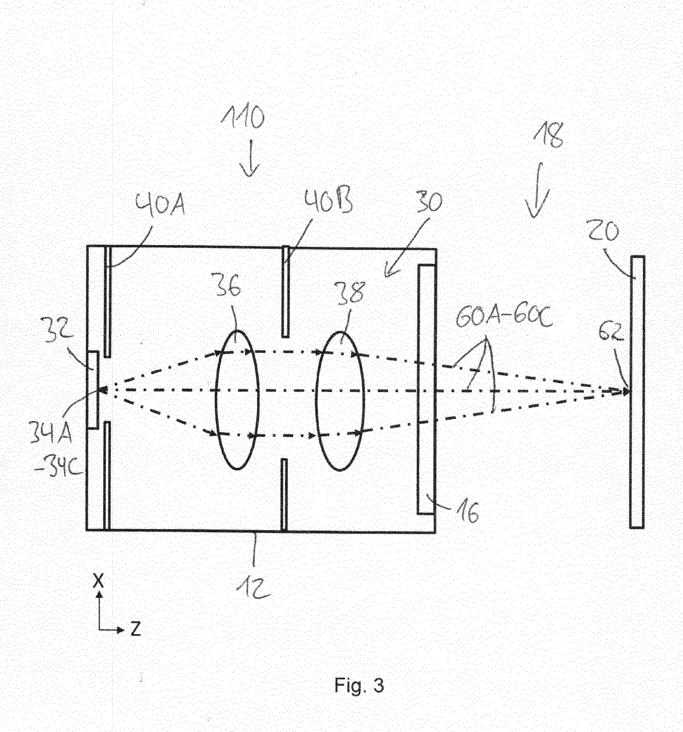

With respect to Figs. 2 and 3 the optical design of the transmission optics of the first embodiment will now be described. Fig. 3 merely shows - due to its perspective which is a top view of the optical sensor 110 of Fig. 2 - the light transmitter 30 and the beam path of the transmitted light, but not the light receiver 50 and the reception optics including the remitted beam path.

The first lens 36 counted in the direction of propagation of the transmitted light, is a collimator lens 36 which is a lens with positive refraction power, for example a bi-convex lens. The second lens 38 counted in the direction of propagation of the transmitted light, is an astigmatic lens 38 having a first focal length for rays propagating within a first plane which extends parallel to the X-Z plane for the embodiments described herein, and a second focal length for rays propagating in a second plane which is orthogonal to the first plane and extends parallel to the Y-Z plane for the embodiments described herein. The first focal length is smaller than the second focal length. The first and the second plane can be defined, e.g., as a meridional plane and a sagittal plane of the astigmatic lens 38. Preferably, the refractive power for rays propagating in the first plane and the refractive power for rays propagating in the second plane are both positive. In particular, the astigmatic lens 38 has a first surface facing to the light sources 34A to 34C being convex within the first plane and concave within the second plane and a second surface facing to the monitored zone 18 being convex.

The optical design of the transmission optics, i.e., in particular the focal length of the lenses 36 and 38 are chosen in a way that the light emitted by the light sources 34A to 34C is formed into a transmitted light bundle of rays, wherein the light bundle has a first focal point for rays propagating within the first plane and a second focal point for rays propagating within the second plane. In the embodiments described herein, the first focal point 62 falls onto the surface of the object 20 whereas the second focal point is in the infinity. Thus, the transmitted light bundie of rays is convergent within the X-Z plane (Fig. 3) and parallel within the Y-Z plane (Fig. 2).

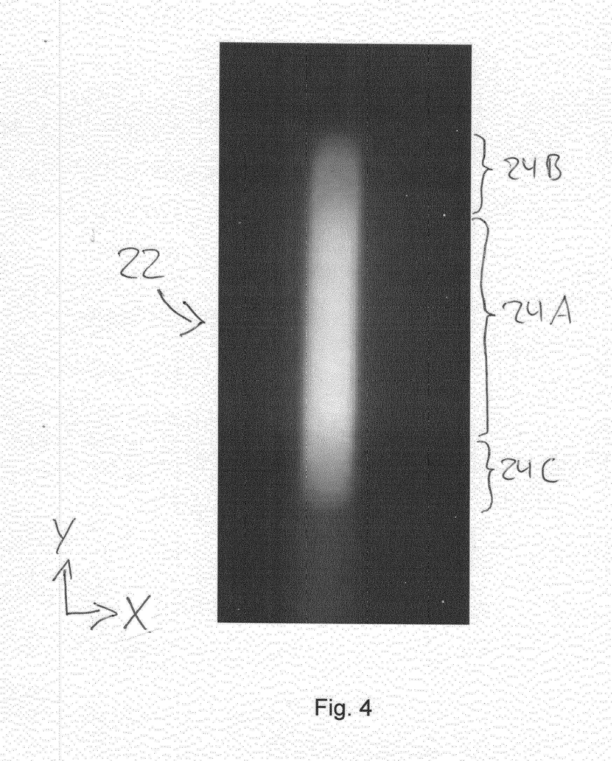

The shape of a light spot 22 generated on an object 20 by the transmitted light is shown in Fig. 4. The light spot 22 has an almost rectangular shape having a main direction of extension in the Y direction. Due to the lateral spacing of the light sources 34A to 34C and the chosen optical design the light spot 22 exhibits three zones 24A to 24C of different color which merge within the respective boundary areas. Whereas the center zone 24A is of white color, the top zone 24B is of red color and the bottom zone 24C of blue color in the embodiment described here ("top" and "bottom" refer to the position in the figure). An image of the light spot 22 generated on the light receiver 50 by the reception optics will also extend in the direction of triangulation (Y direction). The position of the light spot generated on the light receiver 50 can be determined by an evaluation unit, e.g., by determining the position of the optical center of gravity on the light receiver 50.

By focusing the light bundle of rays in the X-Z plane, the light spot 22 generated on the object 20 and imaged on the light receiver 50 can be defined as sharp as possible, i.e., with a high edge steepness in the X direction. This will improve the ability for contrast detection and will reduce the minimum detectable object size.

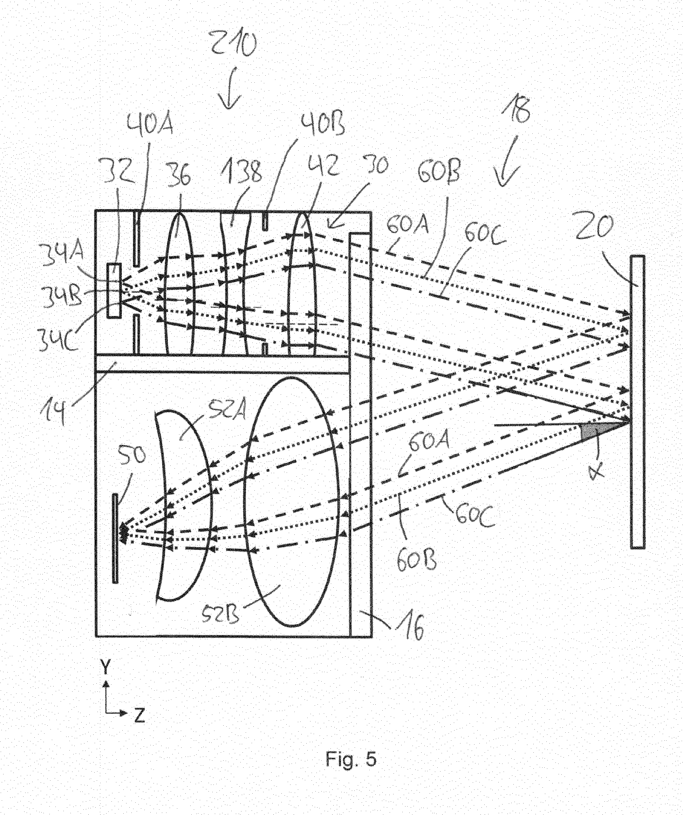

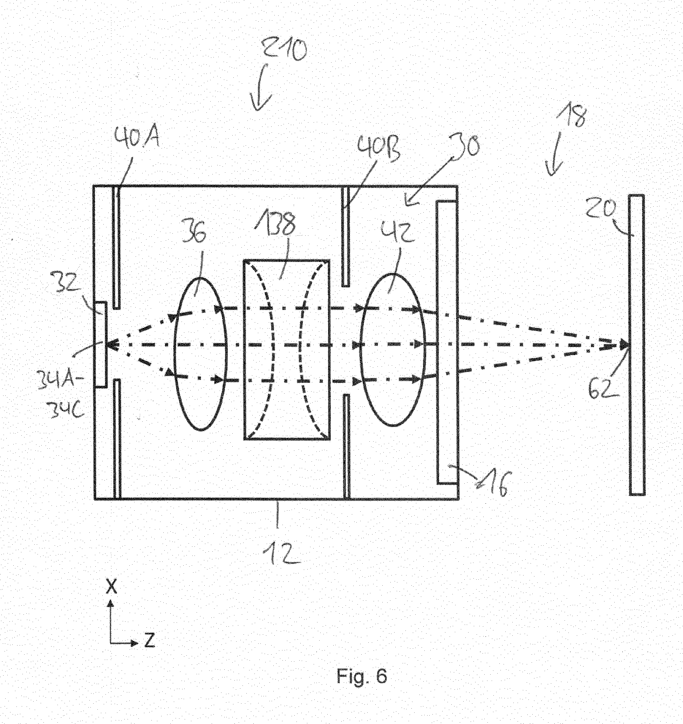

An optical sensor 210 according to a second embodiment not forming part of the claimed invention is shown in Figs. 5 and 6. Since the optical sensor 210 is similar to the optical sensor 110 of Figs. 2 and 3, hereinafter merely the main differences are described.

The astigmatic lens 38 of the optical sensor 110 of the first embodiment is replaced by an astigmatic lens arrangement comprising an astigmatic lens 138 and a collecting lens 42. The astigmatic lens 138 has neutral refractive power within the first plane (corresponding to the X-Z plane) and negative refractive power within the second plane (corresponding to the Y-Z plane) which can be achieved according to the second embodiment in that both surfaces of the astigmatic lens 138 are planar within the first plane and concave within the second plane. The collecting lens 42 which is arranged behind the astigmatic lens 138 in the direction of propagation of the transmitted light has positive refractive power and may be configured as a bi-convex lens. The second aperture 40B operating as a field aperture is arranged between the astigmatic lens 138 and the collecting lens 42.

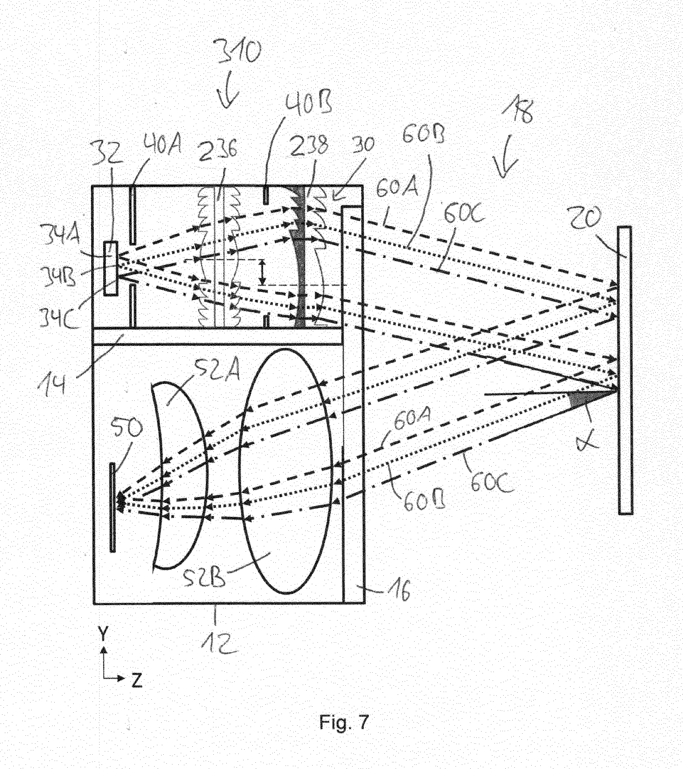

An optical sensor 310 according to a third embodiment is shown in Fig. 7. The main difference to the optical sensor 110 according to the first embodiment is that the refractive lenses 36, 38 are replaced by corresponding Fresnel lenses 236, 238. The optical characteristics of the Fresnel lenses 236, 238 correspond to the refractive lenses 36, 38.

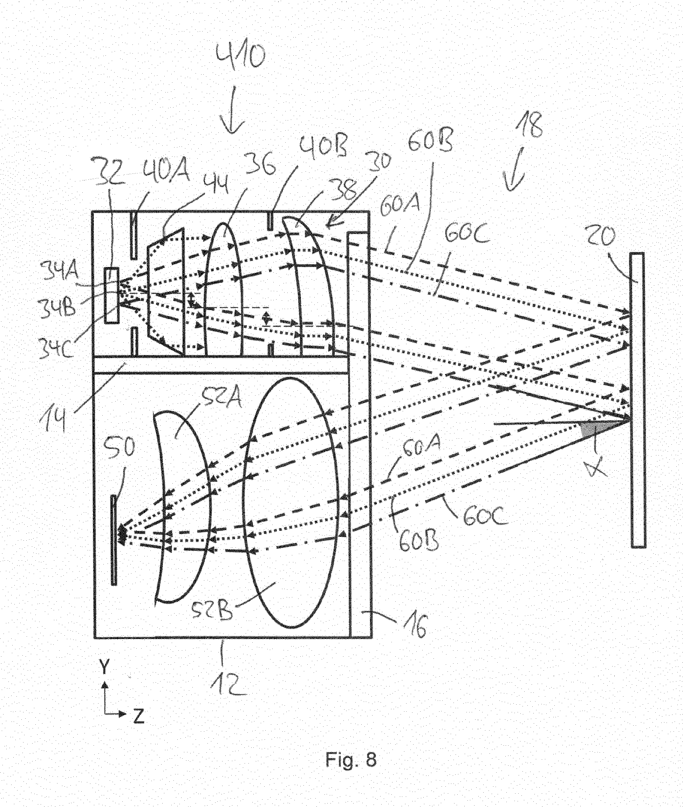

An optical sensor 410 according to a fourth embodiment is shown in Fig. 8. The optical sensor 410 corresponds to the optical sensor 110 of Fig. 2 and additionally has an annular conical reflector 44 which is arranged between the first aperture 40A and the collimator lens 36. The reflector 44 serves to still more effectively collect rays of the transmitted light having a high angle of radiation and directs them to the collimator lens 36.

In order to establish a symmetric triangular system, it is desired that the sides of the triangular system of the optical sensors 110, 210, 310, 410 form at least approximately an isosceles triangle with the connection line between the LED 32 and the light receiver 50 as a basis and the transmission beam path as one side and the remission beam path as a second side. In order to achieve this, the main propagation direction of the transmission beam path should be inclined with respect to the Z direction. In a possible solution to achieve this, in an embodiment not explicitly shown the elements of the transmitter 30 are mounted in a tilted position relative to the Z direction according to the desired inclination angle and aligned on a common optical axis according to the desired transmission beam path.

As an alternative, according to the embodiments shown in the figures the components of the transmitter 30 are oriented such that the centerline of the LED 32 and the respective optical axes of the lenses 36, 38, 138, 42, 236 and 238 respectively are oriented parallel to the Z direction but are offset in the Y direction relative to each other so that preferably the center points of the lenses and the center of the LED are arranged on a line basically defined by the desired transmission beam path. In figures 2, 5, 7 and 8, segments of horizontally oriented thin dashed lines indicate the centerline of the LED 32 and the respective optical axes of the lenses 36, 38, 138, 42, 236 and 238 of the light transmitter 30. For instance, the transversal offset or shift between the lenses 36, 38 may be 0.7 mm. This configuration supports directing the collimated transmission light in the direction of an object 20 to be detected and bouncing back to the light receiver 50 according to the triangle geometry. In this way, the power received on the light receiver 50 can be maximized.

According to a modification at least a part the components of the transmitter 30 are arranged in an adjustable manner at least with regard to their position in the Y direction. This facilitates an optimum adaption of the configuration with respect to the desired working distance.

In a typical application of the optical sensors 110, 210, 310, 410, the light sources 34A to 34C will not be activated at the same time but sequentially so that only one light source is active at one time. This operation mode can be used to gather additional information about the color of a detected object 20 since the degree of remission of an object 20 will usually have a maximum at a wavelength (or at several wavelengths) which corresponds to the color of the object 20. For example, this can be used in an application wherein objects shall be separated or sorted by their color.

One benefit of the present invention is an increase of the total sensing range, i.e., the distance between the minimum and maximum detection distance although making possible a compact design. Optical sensors according to the present invention may increase the sensing range by 40% compared to an optical sensor according to the prior art (Fig. 1). Furthermore, it can be avoided that a particular amount of the light rays will miss the entrance aperture of the reception optics. Additionally, the light spots for the different wavelengths generated on the object 20 and accordingly on the light receiver 50 are brought closer to each other so that the center zone 24B with the white light (see Fig. 4) is extended compared to the top and bottom zones 24B, 24C with basically monochromatic light.

### Reference numeral list

- 10, 110, 210, 310, 410: optical sensor
- 12: housing
- 14: separator wall
- 16: front window
- 18: monitored zone
- 20: object
- 22: light spot
- 24A: center zone of the light spot
- 24B: top zone of the light spot
- 24C: bottom zone of the light spot
- 30: light transmitter
- 32: LED
- 34A, 34B, 34C: light source
- 36A, 36B: lens
- 36, 236: collimator lens
- 38, 138, 238: astigmatic lens
- 40A, 40B: aperture
- 42: collecting lens
- 44: reflector
- 50: light receiver
- 52A, 52B: reception lens
- 60A: red light
- 60B: green light
- 60C: blue light
- 62, 62A, 62B, 62C: focal point

- α: reflection angle
- β: divergence angle

## Claims

1. An optical sensor (10, 110, 210, 310, 410) for the detection of objects (20) in a monitored zone (18) in accordance with the principle of triangulation, the optical sensor (10, 110, 210, 310, 410) comprising a light transmitter (30) for transmitting transmitted light into the monitored zone (18), wherein the light transmitter (30) comprises at least two light sources (34A - 34C) laterally spaced from each other, and a transmission optics;
a light receiver (50) that has a plurality of reception elements for receiving transmitted light from the monitored zone (18) that is remitted by an object (20) to be detected; and
a reception optics arranged upstream of the light receiver (50) for generating a light spot on the light receiver (50) from the remitted light,
wherein the light transmitter (30), the light receiver (50), and the reception optics are arranged with respect to one another such that the position of the light spot on the light receiver (50) in a direction of triangulation results in dependence on a distance of a location in the monitored zone (18) wherefrom the transmitted light is remitted,
wherein the transmission optics is configured to form the light emitted by the at least two light sources (34A - 34C) to form a transmitted light bundle of rays, wherein the light bundle has a first focal point for rays propagating within a first plane and a second focal point for rays propagating within a second plane which is perpendicular to the first plane, wherein the distance of the first focal point from the transmission optics is shorter than the distance of the second focal point from the transmission optics,
wherein the transmission optics comprises an astigmatic lens arrangement having a first focal length for rays propagating in the first plane and a second focal length for rays propagating in the second plane, wherein the first focal length is smaller than the second focal length, and
**characterised in that**
the astigmatic lens arrangement is constituted by one astigmatic lens (38, 138, 238) having a first surface facing to the light source (34A - 34C) being convex within the first plane and concave within the second plane and a second surface facing to the monitored zone (18) being convex.

2. The optical sensor (10, 110, 210, 310, 410) in accordance with claim 1,
wherein the distance of the second focal point from the transmission optics is infinite.

3. The optical sensor (10, 110, 210, 310, 410) in accordance with any one of the preceding claims,
wherein the transmission optics further comprises a collimator lens (36, 236) being positioned between the light sources (34A - 34C) and the astigmatic lens arrangement.

4. The optical sensor (10, 110, 210, 310, 410) in accordance with claim 3,
wherein the transmission optics further comprises an annular conical reflector (44) positioned between the light sources (34A - 34C) and the collimator lens (36) and configured for collimating light emitted from the light sources (34A - 34C) into the direction of the collimator lens (36).

5. The optical sensor (10, 110, 210, 310, 410) in accordance with any of the preceding claims,
wherein the transmission optics comprises a plurality of lenses, wherein at least a part of the lenses are configured as Fresnel lenses (236, 238).

6. The optical sensor (10, 110, 210, 310, 410) in accordance with any of the preceding claims,
wherein the light bundle propagates along a main propagation axis which is inclined with respect to a basic plane which is defined at least by the light sources (34A - 34C).

7. The optical sensor (10, 110, 210, 310, 410) in accordance with claim 6,
wherein the transmission optics comprises a plurality of lenses (36, 38, 42, 138, 236, 238) each of them having a respective optical axis and a respective central point located on the optical axis,
wherein the lenses (36, 38, 42, 138, 236, 238) are laterally shifted so that the respective central points of the lenses (36, 38, 42, 138, 236, 238) are located on the main propagation axis and the respective optical axes of the lenses (36, 38, 42, 138, 236, 238) are oriented in a direction perpendicular to the basic plane.

8. The optical sensor (10, 110, 210, 310, 410) in accordance with any of the preceding claims,
wherein the wavelength of the light emitted from a respective light source (34A - 34C) differs from the wavelength emitted from each other light source (34A - 34C).

9. The optical sensor (10, 110, 210, 310, 410) in accordance with any of the preceding claims,
wherein the light transmitter (30) comprises a RGB LED having three light emitting zones (18) constituting three respective light sources (34A - 34C).

10. The optical sensor (10, 110, 210, 310, 410) in accordance with any of the preceding claims,
wherein the light sources (34A - 34C) are arranged so that they are laterally spaced from each other, preferably exclusively, in a direction of triangulation.

## Patentansprüche

1. Optischer Sensor (10, 110, 210, 310, 410) zur Detektion von Objekten (20) in einem Überwachungsbereich (18) nach dem Prinzip der Triangulation, wobei der optische Sensor (10, 110, 210, 310, 410) umfasst
einen Lichtsender (30) zum Aussenden von Sendelicht in den Überwachungsbereich (18), wobei der Lichtsender (30) mindestens zwei seitlich voneinander beabstandete Lichtquellen (34A - 34C) und eine Transmissionsoptik umfasst;
einen Lichtempfänger (50), der eine Vielzahl von Empfangselementen zum Empfangen von aus dem Überwachungsbereich (18) ausgesandtem Licht, das von einem zu detektierenden Objekt (20) remittiert wird, aufweist; und
eine stromaufwärts des Lichtempfängers (50) angeordnete Empfangsoptik zur Erzeugung eines Lichtflecks auf dem Lichtempfänger (50) aus dem remittierten Licht,
wobei der Lichtsender (30), der Lichtempfänger (50) und die Empfangsoptik derart zueinander angeordnet sind, dass sich die Position des Lichtflecks auf dem Lichtempfänger (50) in einer Triangulationsrichtung in Abhängigkeit von einer Entfernung eines Ortes in dem Überwachungsbereich (18) ergibt, von dem das ausgesandte Licht remittiert wird,
wobei die Transmissionsoptik so konfiguriert ist, dass sie das von den mindestens zwei Lichtquellen (34A - 34C) emittierte Licht formt, um ein transmittiertes Lichtbündel aus Strahlen zu bilden, wobei das Lichtbündel einen ersten Fokuspunkt für Strahlen, die sich in einer ersten Ebene ausbreiten, und einen zweiten Fokuspunkt für Strahlen, die sich in einer zweiten Ebene ausbreiten, die senkrecht zu der ersten Ebene steht, aufweist, wobei der Abstand des ersten Fokuspunkts von der Transmissionsoptik kürzer ist als der Abstand des zweiten Fokuspunkts von der Transmissionsoptik,
wobei die Transmissionsoptik eine astigmatische Linsenanordnung mit einer ersten Brennweite für Strahlen, die sich in der ersten Ebene ausbreiten, und einer zweiten Brennweite für Strahlen, die sich in der zweiten Ebene ausbreiten, aufweist, wobei die erste Brennweite kleiner als die zweite Brennweite ist, und
**dadurch gekennzeichnet, dass**
die astigmatische Linsenanordnung aus einer astigmatischen Linse (38, 138, 238) besteht, die eine erste, der Lichtquelle (34A - 34C) zugewandte Fläche, die in der ersten Ebene konvex und in der zweiten Ebene konkav ist, und eine zweite, dem Überwachungsbereich (18) zugewandte Fläche, die konvex ist, aufweist.

2. Optische Sensor (10, 110, 210, 310, 410) nach Anspruch 1,
wobei der Abstand des zweiten Fokuspunktes von der Transmissionsoptik unendlich ist.

3. Optischer Sensor (10, 110, 210, 310, 410) nach einem der vorhergehenden Ansprüche, wobei die Transmissionsoptik ferner eine Kollimatorlinse (36, 236) umfasst, die zwischen den Lichtquellen (34A - 34C) und der astigmatischen Linsenanordnung angeordnet ist.

4. Optischer Sensor (10, 110, 210, 310, 410) nach Anspruch 3,
wobei die Transmissionsoptik ferner einen ringförmigen konischen Reflektor (44) umfasst, der zwischen den Lichtquellen (34A - 34C) und der Kollimatorlinse (36) angeordnet und so konfiguriert ist, dass er das von den Lichtquellen (34A - 34C) emittierte Licht in Richtung der Kollimatorlinse (36) kollimiert.

5. Optischer Sensor (10, 110, 210, 310, 410) nach einem der vorhergehenden Ansprüche, wobei die Transmissionsoptik eine Vielzahl von Linsen umfasst, wobei zumindest ein Teil der Linsen als Fresnellinsen (236, 238) ausgebildet ist.

6. Optischer Sensor (10, 110, 210, 310, 410) nach einem der vorhergehenden Ansprüche, wobei sich das Lichtbündel entlang einer Hauptausbreitungsachse ausbreitet, die in Bezug auf eine Basisebene, die zumindest durch die Lichtquellen (34A - 34C) definiert ist, geneigt ist.

7. Optische Sensor (10, 110, 210, 310, 410) nach Anspruch 6,
wobei die Transmissionsoptik eine Vielzahl von Linsen (36, 38, 42, 138, 236, 238) umfasst, die jeweils eine entsprechende optische Achse und einen auf der optischen Achse liegenden Mittelpunkt aufweisen,
wobei die Linsen (36, 38, 42, 138, 236, 238) seitlich so verschoben sind, dass die jeweiligen Mittelpunkte der Linsen (36, 38, 42, 138, 236, 238) auf der Hauptausbreitungsachse liegen und die jeweiligen optischen Achsen der Linsen (36, 38, 42, 138, 236, 238) in einer Richtung senkrecht zur Basisebene ausgerichtet sind.

8. Optischer Sensor (10, 110, 210, 310, 410) nach einem der vorhergehenden Ansprüche, wobei sich die Wellenlänge des Lichts, das von einer jeweiligen Lichtquelle (34A - 34C) emittiert wird, von der Wellenlänge unterscheidet, die von jeder anderen Lichtquelle (34A - 34C) emittiert wird.

9. Optischer Sensor (10, 110, 210, 310, 410) nach einem der vorhergehenden Ansprüche, wobei der Lichtsender (30) eine RGB-LED mit drei Licht emittierende Bereiche (18) umfasst, die drei entsprechende Lichtquellen (34A - 34C) bilden.

10. Optischer Sensor (10, 110, 210, 310, 410) nach einem der vorhergehenden Ansprüche, wobei die Lichtquellen (34A - 34C) so angeordnet sind, dass sie seitlich voneinander beabstandet sind, vorzugsweise ausschließlich in einer Triangulationsrichtung.

## Revendications

1. Capteur optique (10, 110, 210, 310, 410) pour la détection d'objets (20) dans une zone surveillée (18) selon le principe de triangulation, le capteur optique (10, 110, 210, 310, 410) comprenant :
un transmetteur de lumière (30) pour transmettre une lumière transmise dans la zone surveillée (18), dans lequel le transmetteur de lumière (30) comprend au moins deux sources de lumière (34A - 34C) espacées latéralement l'une de l'autre, et une optique de transmission ;
un récepteur de lumière (50) doté d'une pluralité d'éléments de réception pour recevoir la lumière transmise à partir de la zone surveillée (18), qui est remise (remitted) par un objet (20) à détecter ; et
une optique de réception disposée en amont du récepteur de lumière (50) pour générer un point lumineux sur le récepteur de lumière (50) à partir de la lumière remise (remitted),
dans lequel le transmetteur de lumière (30), le récepteur de lumière (50) et l'optique de réception sont disposés les uns par rapport aux autres de telle sorte que la position du point lumineux sur le récepteur de lumière (50) dans une direction de triangulation dépend de la distance d'un emplacement dans la zone surveillée (18) à partir duquel la lumière transmise est remise (remitted),
dans lequel l'optique de transmission est configurée pour former la lumière émise par lesdites au moins deux sources de lumière (34A - 34C) afin de former un faisceau de rayons lumineux transmis, le faisceau lumineux ayant un premier point focal pour les rayons se propageant dans un premier plan et un deuxième point focal pour les rayons se propageant dans un deuxième plan perpendiculaire au premier plan, la distance du premier point focal par rapport à l'optique de transmission étant plus courte que la distance du deuxième point focal par rapport à l'optique de transmission,
dans lequel l'optique de transmission comprend un agencement de lentilles astigmatiques ayant une première longueur focale pour les rayons se propageant dans le premier plan et une deuxième longueur focale pour les rayons se propageant dans le deuxième plan, la première longueur focale étant plus petite que la deuxième longueur focale, et
**caractérisé en ce que**
l'agencement de lentilles astigmatiques est constitué d'une lentille astigmatique (38, 138, 238) dont la première surface faisant face à la source de lumière (34A -34C) est convexe dans le premier plan et concave dans le deuxième plan, et dont la deuxième surface faisant face à la zone surveillée (18) est convexe.

2. Capteur optique (10, 110, 210, 310, 410) selon la revendication 1,
dans lequel la distance du deuxième point focal par rapport à l'optique de transmission est infinie.

3. Capteur optique (10, 110, 210, 310, 410) selon l'une quelconque des revendications précédentes,
dans lequel l'optique de transmission comprend en outre une lentille collimatrice (36, 236) positionnée entre les sources de lumière (34A - 34C) et l'agencement de lentilles astigmatiques.

4. Capteur optique (10, 110, 210, 310, 410) selon la revendication 3,
dans lequel l'optique de transmission comprend en outre un réflecteur conique annulaire (44) positionné entre les sources de lumière (34A - 34C) et la lentille collimatrice (36) et configuré pour collimater la lumière émise par les sources de lumière (34A - 34C) dans la direction de la lentille collimatrice (36).

5. Capteur optique (10, 110, 210, 310, 410) selon l'une quelconque des revendications précédentes,
dans lequel l'optique de transmission comprend une pluralité de lentilles, au moins une partie des lentilles étant configurées comme des lentilles de Fresnel (236, 238).

6. Capteur optique (10, 110, 210, 310, 410) selon l'une quelconque des revendications précédentes,
dans lequel le faisceau lumineux se propage le long d'un axe de propagation principal qui est incliné par rapport à un plan de base défini au moins par les sources de lumière (34A - 34C).

7. Capteur optique (10, 110, 210, 310, 410) selon la revendication 6,
dans lequel l'optique de transmission comprend une pluralité de lentilles (36, 38, 42, 138, 236, 238) ayant chacune un axe optique respectif et un point central respectif situé sur l'axe optique,
dans lequel les lentilles (36, 38, 42, 138, 236, 238) sont décalées latéralement de sorte que les points centraux respectifs des lentilles (36, 38, 42, 138, 236, 238) soient situés sur l'axe de propagation principal et que les axes optiques respectifs des lentilles (36, 38, 42, 138, 236, 238) soient orientés dans une direction perpendiculaire au plan de base.

8. Capteur optique (10, 110, 210, 310, 410) selon l'une quelconque des revendications précédentes,
dans lequel la longueur d'onde de la lumière émise par une source de lumière respective (34A - 34C) diffère de la longueur d'onde émise par chacune des autres sources de lumière (34A - 34C).

9. Capteur optique (10, 110, 210, 310, 410) selon l'une quelconque des revendications précédentes,
dans lequel le transmetteur de lumière (30) comprend une LED RVB ayant trois zones d'émission de lumière (18) constituant trois sources de lumière respectives (34A - 34C).

10. Capteur optique (10, 110, 210, 310, 410) selon l'une quelconque des revendications précédentes,
dans lequel les sources de lumière (34A - 34C) sont disposées de manière à être espacées latéralement les unes des autres, de préférence exclusivement, dans une direction de triangulation.
